# EUROPEAN PATENT APPLICATION

(11) **EP 1 329 537 A2**
(43) Date of publication of application: **23.07.2003**
(21) Application number: 03001164.7
(22) Date of filing: 21.01.2003
(51) Int. Cl.: C25B 15/00

(54) **Ventilation system for hydrogen generating electrolysis cell**

(30) Priority: 22.01.2002 US 319089 P
(71) Applicant: Proton Energy Systems, Inc., Wallingford, CT 06492 (US)
(72) Inventor: Mitlitsky Fred, Livermore CA 94550-5523 (US); Boyle F John, Emmaus PA 18049 (US); Dalton T Luke, Portland CT 06480 (US); Myers Blake, Livermore CA 94550-5040 (US); OHABI Hassan, Westfield MA 01085 (US); Shiepe K Jason, Middletown CT 06457 (US)
(74) Representative: Stenger, Watzke & Ring Patentanwälte

(57) **Abstract**

A ventilation system for an electrochemical cell includes a control unit, a sensor disposed in informational communication with the control unit, and a fan disposed in operable communication with the control unit. The sensor is configured to sense a condition within the ventilation system, and the fan is operable in response to information received at the sensor.

## Description

### CROSS REFERENCE TO RELATED APPLICATIONS

This application claims priority from U.S. Provisional Application Serial No. 60/319,089, filed on January 22, 2002, incorporated herein by reference in its entirety.

### BACKGROUND

This disclosure relates to electrochemical cells, and, more particularly, to a ventilation system for an electrolysis cell.

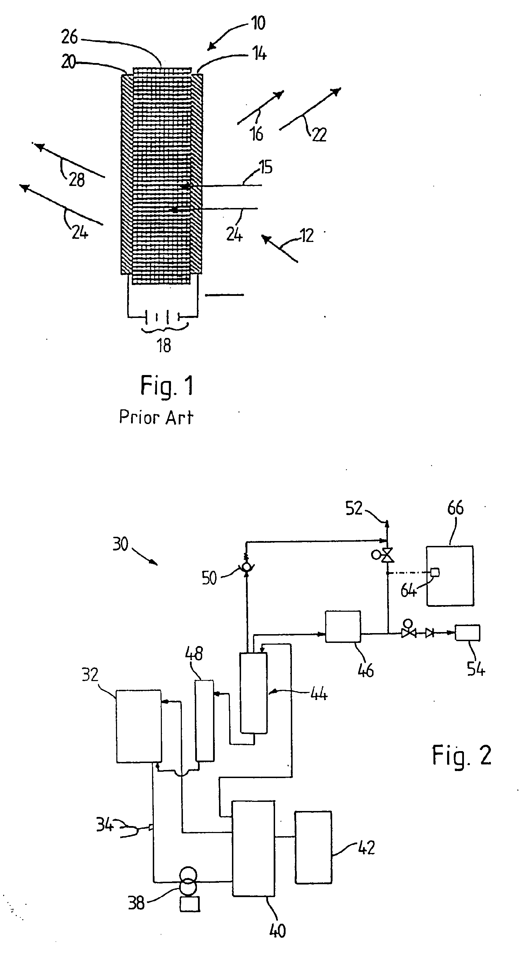

Electrochemical cells are energy conversion devices, usually classified as either electrolysis cells or fuel cells. Proton exchange membrane electrolysis cells can function as hydrogen generators by electrolytically decomposing water to produce hydrogen and oxygen gases. Referring to FIGURE 1, a section of an anode feed electrolysis cell of the prior art is shown generally at 10 and is hereinafter referred to as "cell 10." Reactant water 12 is fed into cell 10 at an oxygen electrode (anode) 14 to form oxygen gas 16, electrons, and hydrogen ions (protons) 15. The chemical reaction is facilitated by the positive terminal of a power source 18 connected to anode 14 and the negative terminal of power source 18 connected to a hydrogen electrode (cathode) 20. Oxygen gas 16 and a first portion 22 of water are discharged from cell 10, while the protons 15 and second portion 24 of the water migrate across a proton exchange membrane 26 to cathode 20. At cathode 20, hydrogen gas 28 is formed and removed, generally through a gas delivery line. Second portion 24 of water, which is entrained with hydrogen gas, is also removed from cathode 20.

An electrolysis cell system may include a number of individual cells arranged in a stack with reactant water being directed through the cells via input and output conduits formed within the stack structure. The cells within the stack are sequentially arranged, and each one includes a membrane electrode assembly defined by a proton exchange membrane disposed between a cathode and an anode. The cathode, anode, or both may be gas diffusion electrodes that facilitate gas diffusion to proton exchange membrane. Each membrane electrode assembly is in fluid communication with a flow field positioned adjacent to the membrane electrode assembly. The flow fields are defined by structures configured to facilitate fluid movement and membrane hydration within each individual cell.

The second portion of water, which is entrained with hydrogen gas, is discharged from the cathode side of the cell and is fed to a phase separation unit to separate the hydrogen gas from the water, thereby increasing the hydrogen gas yield and the overall efficiency of the cell in general. The removed hydrogen gas may be fed directly to a unit for use as a fuel, or it may be fed to a storage facility, e.g., a cylinder or a similar type of containment vessel.

If the hydrogen gas is fed to a storage facility, a ventilation system (not shown) may be utilized in conjunction with the storage facility to provide for the removal of fugitive gas emissions and for the removal of heat from heat-generating components associated with the generation of the hydrogen gas. An airflow stream generally provides for such ventilation. Because ventilation systems are typically open loop systems, the airflows are continuous and unvarying with respect to the amount of fugitive gas emissions detected and the amount of heat generated. A lack of control over the airflow ventilating streams generally limits the efficiency with which the electrochemical cell operates.

While existing ventilation systems are suitable for their intended purposes, there still remains a need for improvements, particularly regarding the effectiveness of the removal of fugitive gas emissions and the removal of generated heat. Therefore, a need exists for a ventilation system that is capable of providing a substantially complete purge of a structure in which gases are generated and contained in order to increase the efficiency of the electrochemical system into which the ventilation system is incorporated.

### SUMMARY

Disclosed herein is a gas producing system, comprising an electrochemical cell; a gas storage facility disposed in fluid communication with the electrochemical cell; and a ventilation system disposed in fluid communication with the electrochemical cell and the gas storage facility, the ventilation system comprising a first zone in which a first pressure is maintained and a second zone in which a second pressure is maintained, the second pressure being less than the first pressure.

Also disclosed herein is a ventilation system for an electrochemical cell ventilation system comprises a control unit; a sensor disposed in informational communication with the control unit, the sensor being configured to sense a condition within the ventilation system; and a fan disposed in operable communication with the control unit, the fan being operable in response to information received at the sensor to provide a positive airflow through the ventilation system and into an external environment.

In accordance with another embodiment, a ventilation system for a hydrogen-producing electrolysis cell disposed in fluid communication with a hydrogen storage facility comprises a cabinet defining a first zone and a second zone; a sensor disposed at the cabinet; a control unit disposed in informational communication with the sensor; and a fan adapted to provide an airflow to the cabinet and to maintain a positive pressure across the first and second zones, the fan being disposed in informational communication with the control unit and being controllable in response to a signal received at the sensor, and wherein the pressure in the first zone is greater than a pressure in the second zone.

In yet another embodiment, a ventilation system for a hydrogen storage facility disposed in fluid communication with a hydrogen-producing electrolysis cell, the ventilation system comprising means for sensing a condition at the hydrogen storage facility; and means for providing a purging of the hydrogen storage facility disposed in operable communication with the means for sensing the condition at the hydrogen storage facility.

The above described and other features are exemplified by the following figures and detailed description.

### BRIEF DESCRIPTION OF THE DRAWINGS

Referring now to the FIGURES, which are exemplary embodiments, and wherein the like elements are numbered alike:
FIGURE 1 is a schematic representation of an anode feed electrolysis cell of the prior art;
FIGURE 2 is a schematic representation of a gas generating apparatus into which an electrolysis cell system may be incorporated;
FIGURE 3 is a perspective partially cutaway view of a ventilation system that can be used in conjunction with an electrochemical cell system;
FIGURE 4 is a schematic representation of a ventilation system that can be used in conjunction with an electrochemical cell system;
FIGURE 5 is an exploded perspective view of the ventilation system of FIGURE 3;
FIGURE 6 is a perspective view of a lower portion of the ventilation system of FIGURE 3; and
FIGURE 7 is a perspective view of a cascade section of the ventilation system of FIGURE 3.

### DETAILED DESCRIPTION

Referring to FIGURE 2, an exemplary embodiment of an electrolysis cell system is shown generally at 30 and is hereinafter referred to as "system 30." System 30 may be generally suitable for generating hydrogen for use in gas chromatography, as a fuel, and for various other applications. While the improvements described below are described in relation to an electrolysis cell, the improvements are applicable to electrolysis, fuel cells, and the like, particularly regenerative fuel cells. Furthermore, although the description and figures are directed to the production of hydrogen and oxygen gas by the electrolysis of water, the apparatus is applicable to the generation of other gases from other reactant materials.

System 30 includes a water-fed electrolysis cell capable of generating hydrogen gas from reactant water. The reactant water utilized by system 30 is stored in water source 32 and is fed by gravity or pumped through a pump 38 into an electrolysis cell stack 40. The supply line, which is preferably clear plasticizer-free tubing, includes an electrical conductivity sensor 34 disposed therewithin to monitor the electrical potential of the water, thereby determining its purity and ensuring its adequacy for use in system 30.

Cell stack 40 comprises a plurality of cells similar to cell 10 described above with reference to FIGURE 1 encapsulated within sealed structures (not shown). The reactant water is received by manifolds or other types of conduits (not shown) that are in fluid communication with the cell components. An electrical source 42 is disposed in electrical communication with each cell within cell stack 40 to provide a driving force for the dissociation of the water. Electrical source 42 is operatively communicable with a cell control system (not shown) that controls the operation of system 30.

Oxygen and water exit cell stack 40 via a common stream that recycles the oxygen and water to water source 32 where the oxygen is vented to the atmosphere. The hydrogen stream, which is entrained with water, exits cell stack 40 and is fed to a gas/liquid separator or phase separation tank, which is a hydrogen/water separation apparatus 44, hereinafter referred to as "separator 44," where the gas and liquid phases are separated. The exiting hydrogen gas (having a lower water content than the hydrogen stream to separator 44) is further dried at a drying unit 46, which may be, for example, a diffuser, a pressure swing absorber, desiccant, or the like. This wet hydrogen stream can have a pressure of about 1 pounds per square inch (psi) up to and exceeding about 10,000 psi. Preferably the hydrogen stream pressure is about 1 psi to about 6000 psi with a pressure of about 1,500 psi to about 2,500 psi preferred for some applications with pressures of about 100 psi to about 275 psi preferred for other applications.

Water with trace amounts of entrained hydrogen is returned to water source 32 from separator 44 through a low-pressure hydrogen separator 48. Low pressure hydrogen separator 48 allows hydrogen to escape from the water stream due to the reduced pressure, and also recycles water to water source 32 at a lower pressure than the water exiting separator 44. Separator 44 also includes a release 50, which may be a relief valve, to rapidly purge hydrogen to a hydrogen vent 52 when the pressure or pressure differential exceeds a pre-selected limit.

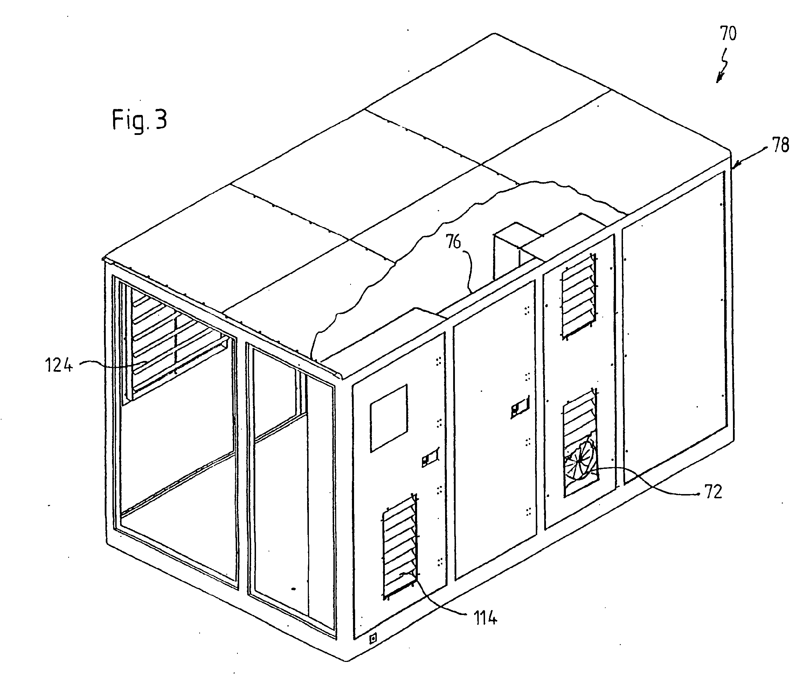

Pure hydrogen from drying unit 46 is fed to a hydrogen storage facility 54. Hydrogen storage facility 54, which is in fluid communication with cell stack 40, is disposed at a ventilation system (described below with reference to FIGURES 3 through 7). The ventilation system may be either remotely located with respect to system 30 or positioned adjacent to system 30.

A hydrogen output sensor 64 is incorporated into system 30 to monitor the hydrogen pressure. Hydrogen output sensor 64 can be any suitable output sensor including, but not limited to, a flow rate sensor, a mass flow sensor, or any other quantitative sensing device such as a pressure transducer that converts the gas pressure within the hydrogen line to a voltage or current value for measurement. Hydrogen output sensor 64 is interfaced with a transmitter 66, which is capable of converting the voltage or current value into a pressure reading. A display (not shown) may be disposed in operable communication with transmitter 66 to provide a reading of the pressure, for example, at the location of hydrogen output sensor 64 on the hydrogen line. Transmitter 66 is any suitable converting device, such as an analog circuit, a digital microprocessor, or the like, capable of converting a sensor signal into a displayable value.

The ventilation system can be utilized in conjunction with the electrolysis cell system 30 to dissipate the buildup of fugitive hydrogen emissions at hydrogen storage facility 54 as well as at other components associated with system 30. Referring now to FIGURE 3, one exemplary embodiment of such a ventilation system is shown at 70. Ventilation system 70 comprises ductwork 76 and fan(s), one of which is shown at 72, that provide for the convective flow of air through the associated ductwork 76 to remove heat (e.g., from heat-producing equipment associated with the system such as electrical componentry, compressor(s), and the like) and to maintain zones of positive pressure within system 70, thereby purging areas at which vapors may accumulate during the operation of the system. Ventilation system 70 further comprises a cabinet 78, which may house hydrogen storage facility 54, and which provides a shell within which ventilation system 70 is disposed. A first access hatch 75 is preferably disposed within the wall of cabinet 78 to allow an operator ingress or egress from cabinet 78.

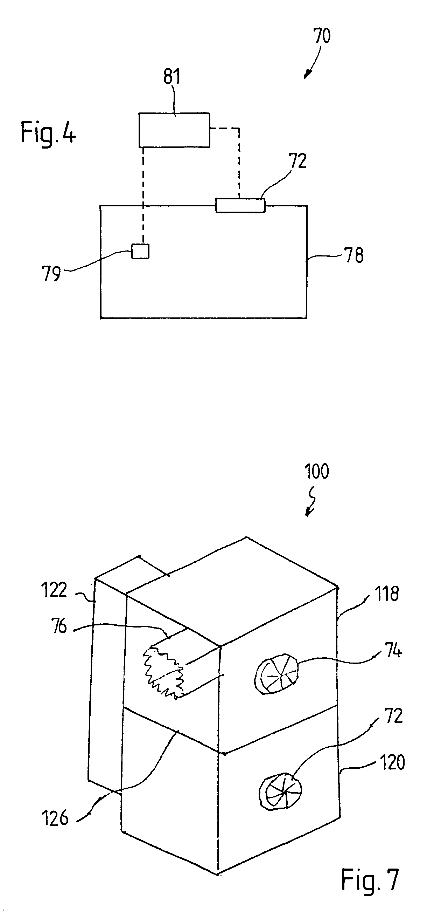

Referring now to FIGURE 4, a closed loop control system can be incorporated into system 70 to provide for the operation of the fans to effect the ventilation of cabinet 78. The control system allows informational communication to be maintained between various sensors, one of which is shown at 79, that detect conditions affecting the operation of system 70 and a control unit 81 that receives input from the various sensors. Variables detected by the control system include, but are not limited to, the presence of hydrogen in system 70, pressure within cabinet 78, the temperature within system 70, and airflow rates. Analysis of the input from the sensors allows measures to be taken that ensure proper ventilation of system 70. Control unit 81 is configured to respond to signals from the sensors to adjust the pressure within cabinet 78 by varying the amount of air inducted into cabinet through fans (e.g., fan 72). By varying the airflow through cabinet 78, the interior portion of cabinet 78 is vented to control gases and/or heat within cabinet 78. Control unit 81 is configured to respond to sensor readings from system 70.

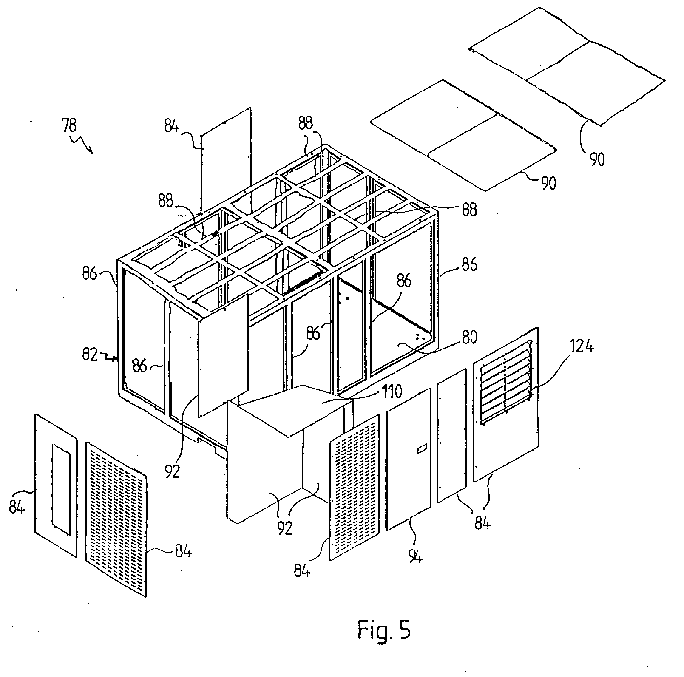

Referring now to FIGURE 5, cabinet 78 is shown in greater detail. Cabinet 78 is a parallelepiped structure defined by a flooring surface 80, walls extending perpendicularly from flooring surface 80, and a ceiling disposed opposite flooring surface 80. The structure comprises a frame, one exemplary embodiment of which is shown at 82, defined by upright members 86 and cross members 88 arranged to form a skeletal support structure disposed over flooring surface 80. Upright members 86 are positioned to extend normally from the plane of flooring surface 80. Cross members 88 assist in maintaining upright members 86 in position. Cross members 88 and upright members 86 can comprise any configuration capable of providing the desired structural integrity, e.g., as shown in FIGURE 5, in a truss arrangement (not shown), and the like. Panels 84 disposed over frame 82 enclose frame 82 and may be configured in various manners to either allow or prevent the flow of air in or out of cabinet 78. Cross members 88 support ceiling panels 90. Partition members 92 may define boundaries of various sections of cabinet 78. A second access hatch 94 is disposed at frame 82 between upright members 86 and is dimensioned to allow an operator ingress or egress from cabinet 78.

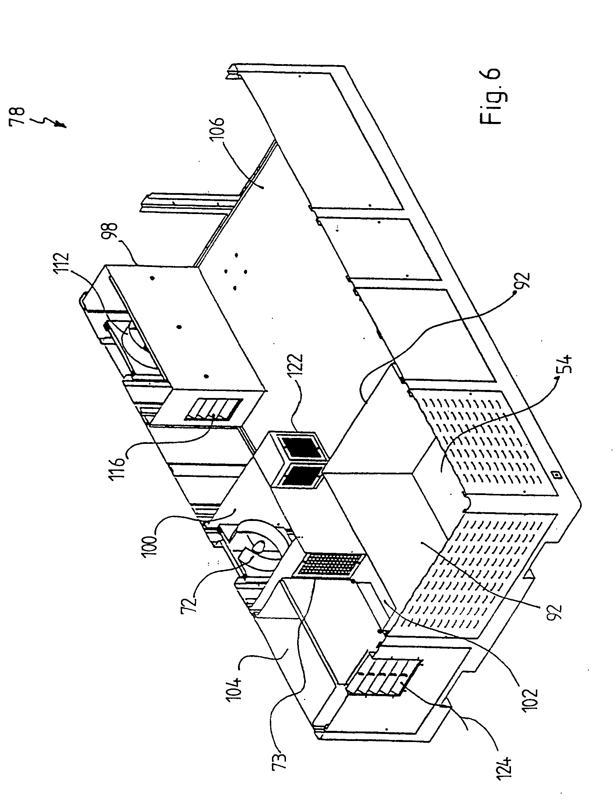

In FIGURE 6, one exemplary layout of the various sections of cabinet 78 is shown. The various sections include hydrogen storage facility 54. Other sections include an electrical section 98, a cascade section 100 that provides for the distribution of hydrogen gas from the electrochemical cell system, a hydrogen dispensing unit 102 disposed in fluid communication with hydrogen storage facility 54, a hydrogen dispensing operator interface 104 disposed in communication with hydrogen dispensing unit 102, and a compressor mounting section 106.

Referring to FIGURES 5 and 6, hydrogen storage facility 54 is dimensioned to accommodate the storage of a plurality of hydrogen-filled vessels (not shown). The vessels, which may be cylinders, are maintained in fluid communication with the electrochemical cell system to receive hydrogen therefrom. As shown, hydrogen storage facility 54 is disposed at a corner of cabinet 78 and is separated from ventilation system 70 by two partition members 92. In another exemplary embodiment of hydrogen storage facility 54, the two partition members 92 may be replaced by a single curvilinear member (not shown). Moreover, hydrogen storage facility 54 may be disposed intermediate adjacent corners of cabinet 78 and separated from other components of cabinet 78 by one curvilinear member or several partition members.

Hydrogen storage facility 54 is bounded at an upper end thereof by a ceiling plate 110, as can be seen in FIGURE 5. Ceiling plate 110 is disposed at partition members 92 such that an inner surface of ceiling plate 110 is tapered with respect to a level plane of flooring surface 80 of cabinet 78. The taper of ceiling plate 110 is such that edges of ceiling plate 110 adjacent to the outer defining edges of cabinet 78 are at higher elevations from flooring surface 80 than the edges of ceiling plate 110 disposed proximate the interior portion of cabinet 78. The degree of tapering of ceiling plate 110 is such that fugitive emissions from hydrogen storage vessels stored in hydrogen storage facility 54 are vented along the tapered ceiling plate 110 to the outer defining edges of cabinet 78 where they can be vented from the confines of facility 54.

Referring specifically to FIGURE 6, electrical section 98 comprises an enclosure in which the electrical componentry (not shown) associated with the operation of system 70 is located. Electrical section 98 is fluidly sealed from the inner area of cabinet 78. An electrical section fan 112 is mounted under a louvered opening (shown at 114 in FIGURE 3). The enclosure further includes a louvered exhaust port 116 configured to provide airflow communication between the inner area of the enclosure of electrical section 98 and the inner environment of cabinet 78 and to maintain a positive pressure within the electrical section 98. The electrical componentry housed within the enclosure of electrical section 98 may provide communication between the various sensors disposed within ventilation system 70 and the control unit shown at 81 in FIGURE 4.

Electrical section 98 is disposed in airflow communication with cascade section 100 through ductwork 76, as is shown in FIGURE 3. The enclosure of cascade section 100, shown with reference to FIGURES 6 and 7, is defined by an upper housing 118 disposed at a lower housing 120. A barrier 126 separates upper housing 118 and lower housing 120 from each other such that fluid communication therebetween is prevented. Upper housing 118 is, however, disposed in airflow communication with electrical section 98 through ductwork 76. Air is inducted into upper housing 118 via an upper cascade section fan 74 and is circulated through ductwork 76 to electrical section 98, where the air is vented through louvered exhaust port 116. Upper housing 118 is also directly vented to the interior of cabinet 78 through a vertically oriented ductwork 122 extending along the exterior surfaces of upper housing 118 and lower housing 120. Airflow through vertically oriented ductwork 122 allows for the purging of upper housing 118 through a screen 73 into cabinet 78. Upper cascade section fan 74 is dimensioned to provide from about 500 cubic feet per minute (cfm) of air to about 1500 cfm of air into cabinet 78.

Lower housing 120 is disposed in airflow communication with hydrogen dispensing unit 102 of cabinet 78. A lower cascade section fan 72, seen in FIGURES 3, 6, and 7, is similar to upper cascade section fan 74 and inducts air into lower housing 120 and exhausts the air into hydrogen dispensing section 102. The exhausting of air into hydrogen dispensing section 102 creates a positive pressure therein, and thereby purges any fugitive hydrogen gas vapors within hydrogen dispensing section 102 to the exterior of cabinet 78.

Referring now to FIGURES 3 through 7, panels 84 disposed over frame 82 may be of various configurations depending upon the extent of fluid communication that is to be maintained between the inner environment of cabinet 78 and the adjacent environment (i.e., external to cabinet 78). In particular, panels 84 disposed over areas through which airflow is to be maintained in response to an increase in pressure within cabinet 78 and various sections of cabinet 78 may include louvered exhaust ports 124. For example, panel 84 adjacent to compressor mounting section 106 includes louvered exhaust port 124. Louvered exhaust port 124 may be adjustable, e.g., arranged such that individual vanes are pivotally disposed across and supported at opposing sides of an opening disposed in panel 84. As such, upon pressure exerted at an inner area of cabinet 78, the vanes rotate outward to open and relieve the pressure. The pressure may be a direct increase in the pressure within cabinet 78, or it may be a convective airflow passed through the vanes from the inner environment of cabinet 78 to the adjacent environment external to cabinet 78. Generally, the vanes are configured to rotate into the open position at a pressure of from about one psi to about two psi above atmospheric pressure. The vanes of each louvered exhaust port may be articulately linked such that upon the opening of one vane, all of the vanes swing open. Furthermore, the vanes, whether fixed in position or articulately linked, are slanted in a downward direction to prevent or at least minimize the probability of debris entering cabinet 78. Other panels at which louvered exhaust ports 124 may be disposed include, but are not limited to, those panels adjacent to an area of cabinet 78 at which hydrogen is dispensed.

Panels 84 that generally do not include louvered openings are the panels positioned adjacent to the area in which hydrogen storage facility 54. Such panels include slots or other similarly configured openings through which a natural airflow can be maintained. The slots are generally horizontally oriented within the surfaces of the panels. An upper edge of each slot is dimensioned and configured to extend over a lower edge of each slot, thereby providing at least some degree of protection to slot from debris.

Referring now to FIGURES 2 through 7, the layout of ventilation system 70 relative to flooring surface 80 is described. In describing the layout, cabinet 78 is oriented such that a front is defined by the side including first access hatch 75, a back is defined by the side including second access hatch 94, a right side is defined by the side at which hydrogen dispensing unit 102 is adjacently positioned, and a left side is defined by the side opposite the right side. Electrical section 98 is positioned at the left front corner of cabinet 78, first access hatch 75 is positioned on the front adjacent to electrical section 98, cascade section 100 is positioned at the front of cabinet 78 adjacent to first access hatch 75 and opposite electrical section 98, and hydrogen dispensing operator interface 104 is positioned at the right front corner of cabinet 78. Electrical section fan 112 is mounted in the front of electrical section 98 proximate the lower edge thereof. Fan 72 is mounted in the front of cascade section 100 proximate the lower edge thereof, and fan 74 is mounted in the front of cascade section 100 proximate the upper edge thereof. Each fan 72, 74, 112 is covered by a louver. Hydrogen storage facility 54 is positioned at the right back corner, and hydrogen dispensing unit 102 is positioned on the right side intermediate the front and back right corners. Compressor mounting section 106 is positioned at the left back comer. Second access hatch 94 is positioned on the back side intermediate the back corners. Communication with the electrolysis cell system is maintained through the left side of cabinet 78.

Hydrogen gas generated at the electrolysis cell system is received at hydrogen storage facility 54. During the operation of ventilation system 70, fans 72, 74, and 112 induct air into cabinet 78 through a lower section 120 of cascade section 100, an upper section 118 of cascade section 100, and electrical section 98 respectively. Air inducted through fan 72 into lower section 120 of cascade section 100 creates a positive pressure differential across lower section 120 of cascade section 100 and hydrogen dispensing unit 102, thereby creating a high pressure zone within lower section 120. The positive pressure causes the air to be exhausted through screen 73 and into a zone (defined by hydrogen dispensing unit 102) in which the pressure is lower than it was in lower section 120. A positive pressure differential across hydrogen dispensing unit 102 and the environment external to cabinet 78 causes the air to be exhausted from hydrogen dispensing unit 102 to the outside environment through louvered exhaust port 124, thereby purging any hydrogen gas within hydrogen dispensing unit 102 to the exterior of cabinet 78.

Air inducted through fan 74 into upper section 118 of cascade section 100 is diverted through two channels. The first channel extends through ductwork 76 to electrical section 98. The second channel extends through vertically oriented ductwork 122 where it is likewise exhausted to the interior of cabinet 78. The air within cabinet 78 is exhausted through louvered exhaust ports 124, thereby purging any fugitive emissions from the compressor. Because electrical section 98 is fluidly sealed from the interior of cabinet 78, both channels contribute to the maintenance of a positive pressure across electrical section 98 and the interior of cabinet 78 to create a high pressure zone such that hydrogen gas is incapable of permeating electrical section 98. The high pressure zone of electrical section 98 causes the air within electrical section 98 to be exhausted to the interior of cabinet 78 through louvered exhaust port 116.

As stated above, any fugitive emissions from the hydrogen-filled vessels disposed within hydrogen storage facility 54 are directed along the tapered ceiling plate 110 and vented to the exterior of cabinet 78 through the slots in panels 84 that define the outer boundaries of hydrogen storage facility 54.

Disclosed herein is an electrochemical cell system (e.g., which may produce hydrogen gas). The electrochemical cell system comprises a gas storage facility (e.g., a cylinder, a tank, or the like) disposed in fluid communication with an electrochemical cell; and a ventilation system optionally disposed in fluid and or physical communication with the electrochemical cell and the gas storage facility. The ventilation system comprises a first zone in which a first pressure can be maintained and a second zone in which a second, lower, pressure can be maintained. The ventilation system comprises a fan, blower, or the like, for maintaining the pressures in the first and second zones.

An exemplary embodiment of the ventilation system comprises a control unit; sensor(s) (e.g., a pressure sensor, a temperature sensor, an airflow sensor, a gas sensor, or the like) disposed in informational communication with a control unit, and a pressurizer (e.g., fan, blower, or the like) disposed in operable communication with the control unit. The sensor is configured to sense a condition within the ventilation system; and the pressurizer can be operable based on various factors: i. in response to information received from the sensor, ii. at regularly timed intervals, iii. upon manual control, iv. based upon the condition of the electrochemical cell (e.g., operating, shutoff, degree of operation, and the like), as well as combinations of at least one of the foregoing factors. The pressurizer can provide a fluid flow (e.g., an airflow) through the ventilation system, and can be configured to maintain a positive pressure across zones defined within the ventilation system to ensure the direction of the gas flow through the system and around various components thereof.

An exemplary embodiment of the ventilation system for a hydrogen-producing electrolysis cell may be disposed in fluid communication with a hydrogen storage facility in which the ventilation system comprises a cabinet defining a first and a second zone; a sensor disposed at the cabinet; a control unit disposed in informational communication with the sensor; a fan configured to provide an airflow to the cabinet and to maintain a positive pressure across the first and second zone, and a ductwork disposed in airflow communication with the fan. The fan may be disposed in informational communication with the control unit and may be controllable in response to a signal received at the sensor. A hydrogen dispensing unit (which may include a hydrogen dispensing operator interface) may be disposed at the cabinet and in fluid communication with the hydrogen storage facility. The cabinet is defined by a skeletal support structure having a panel disposed thereover.

The cabinet comprises louvers disposed therein. The louvers are configured to be closed upon an equalization of pressure across a wall of the cabinet and configured to rotate open upon a pressure within the cabinet being greater than a pressure at an environment adjacent to the cabinet. For example, the louvers are configured to rotate open when the pressure within the cabinet exceeds the pressure at the environment adjacent to the cabinet by about one pound per square inch (psi).

The hydrogen gas storage facility comprises a partition member positioned to inhibit fluid communication between an area defined by the hydrogen gas storage facility and an area defined by the cabinet. The partition member is positioned such that an edge thereof is disposed at a first elevation proximate a defining boundary of the cabinet and such that an opposing edge thereof is disposed at a second elevation proximate a defining boundary of the cabinet. The first elevation is greater than the second elevation. The hydrogen gas storage facility is preferably fluidly sealed from the cabinet and is disposed in fluid communication with an environment adjacent to the cabinet, the fluid communication being affected through slots disposed in a panel enclosing the hydrogen gas storage facility.

A ventilation system for a hydrogen storage facility disposed in fluid communication with a hydrogen-producing electrolysis cell comprises means for sensing a condition at the hydrogen storage facility; and means for providing a purging of the hydrogen storage facility disposed in operable communication with the means for sensing the condition at the hydrogen storage facility.

Ventilation system 70, as described above, enhances the dispersal of fugitive hydrogen gas emissions from equipment associated with the generation and storage of hydrogen gas. By providing various points of induction and exhaust, the ventilation system maintains a flow of air. Such a flow of air effectively prevents the accumulation of any hydrogen gas at corners and ceilings of the cabinet, as well as at the electrical section. The complete and effective removal of such hydrogen gas ensures the continued efficient operation of the electrolysis cell system and eliminates the need for expensive cabinets and equipment.

While the disclosure has been described with reference to a preferred embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A gas producing system, comprising:
an electrochemical cell;
a gas storage facility disposed in fluid communication with the electrochemical cell; and
a ventilation system disposed in fluid communication with the electrochemical cell and the gas storage facility, the ventilation system comprising a first zone in which a first pressure is maintained and a second zone in which a second pressure is maintained, the second pressure being less than the first pressure.

2. The gas producing system of Claim 1, wherein the electrochemical cell produces hydrogen gas.

3. The gas producing system of Claim 1, wherein the gas storage facility is a gas cylinder.

4. The gas producing system of Claim 1, wherein the ventilation system comprises a fan for maintaining the first pressure in the first zone and the second pressure in the second zone.

5. The gas producing system of Claim 1, wherein the ventilation system further comprises a closable opening in fluid communication with an external environment, wherein the closable opening is adapted to open when the second pressure within the second zone is greater than about 1 pound per square inch above atmospheric pressure.

6. A ventilation system for an electrochemical cell, the ventilation system comprising:
a control unit;
a sensor disposed in informational communication with the control unit, the sensor being configured to sense a condition within the ventilation system; and
a fan disposed in operable communication with the control unit, the fan being operable in response to information received at the sensor to provide a positive airflow through the ventilation system and into an external environment.

7. The ventilation system of Claim 6, wherein the fan is configured to maintain a positive pressure across zones defined within the ventilation system.

8. The ventilation system of Claim 6, wherein the sensor comprises a pressure sensor, a gas sensor, an airflow sensor, temperature sensor, or combinations comprising at least one of the foregoing sensors.

9. The ventilation system of Claim 6, wherein the electrochemical cell is a hydrogen gas producing electrolysis cell.

10. A ventilation system for a hydrogen-producing electrolysis cell disposed in fluid communication with a hydrogen storage facility, the ventilation system comprising:
a cabinet defining a first zone and a second zone;
a sensor disposed at the cabinet;
a control unit disposed in informational communication with the sensor; and
a fan adapted to provide an airflow to the cabinet and to maintain a positive pressure across the first and second zones, the fan being disposed in informational communication with the control unit and being controllable in response to a signal received at the sensor, and wherein the pressure in the first zone is greater than a pressure in the second zone.

11. The ventilation system of Claim 10, further comprising a hydrogen dispensing unit disposed within the second zone and in fluid communication with the hydrogen storage facility.

12. The ventilation system of Claim 11, further comprising a hydrogen dispensing operator interface disposed in communication with the hydrogen dispensing unit.

13. The ventilation system of Claim 10, wherein the cabinet is defined by a skeletal support structure having a panel disposed thereover.

14. The ventilation system of Claim 10, further comprising a third zone, wherein the third zone houses a fluidly sealed electrical section, a fan, and an exhaust port, wherein the fan is adapted to maintain a positive pressure within the fluidly sealed electrical section.

15. The ventilation system of Claim 10, wherein the hydrogen gas storage facility comprises a tapered ceiling plate and a vent disposed along an outer defining edge of the cabinet and the tapered ceiling plate.

16. The ventilation system of Claim 15, wherein the hydrogen gas storage facility is disposed in airflow communication with an external environment adjacent to the cabinet, the airflow communication being effected through fixed openings disposed in a panel enclosing the hydrogen gas storage facility and the vent disposed along the outer defining edge of the cabinet and the tapered ceiling plate.

17. The ventilation system of Claim 10, wherein the cabinet further comprises a closable opening in fluid communication with the second zone and is adapted to be closed upon an equalization of a pressure within the second zone and an enviromnent adjacent to the cabinet, and opened upon the pressure within the second zone being greater than a pressure at the environment adjacent to the cabinet.

18. The ventilation system of Claim 17, wherein the closable opening is configured to open when the pressure within the second zone exceeds the pressure at the environment adjacent to the cabinet by about one pound per square inch.

19. A ventilation system for a hydrogen storage facility disposed in fluid communication with a hydrogen-producing electrolysis cell, the ventilation system comprising:
means for sensing a condition at the hydrogen storage facility; and
means for providing a purging of the hydrogen storage facility disposed in operable communication with the means for sensing the condition at the hydrogen storage facility.

20. The ventilation system of Claim 19, further comprising means for maintaining a positive pressure in an electrical section fluidly sealed from the system.
